# EUROPEAN PATENT APPLICATION

(11) **EP 4 668 680 A1**
(43) Date of publication of application: **24.12.2025**
(21) Application number: 24305965.6
(22) Date of filing: 19.06.2024
(51) Int. Cl.: H04L 12/40, F04D 13/00, F04D 13/06, F04D 15/00, F04D 29/40

(54) **SENSOR HUB MODULE FOR PROCESSING AND/OR TRANSMITTING DATA**

(71) Applicant: WILO SE, 44263 Dortmund (DE)
(72) Inventor: ROBIN, Laurent, 44263 Dortmund (DE); STROOBANT, Philippe, 44263 Dortmund (DE); LE STRAT, Olivier, 44263 Dortmund (DE)
(74) Representative: Schwöbel, Thilo K.

(57) **Abstract**

The invention relates to a sensor hub module (1) for processing and/or transmitting data, wherein the data is receivable from at least a first sensor (10), a second sensor (20) and a main controller (30),
wherein the module (1) comprises a first connecting element (12) for electrically connecting the first sensor (10) to the module (1),
wherein the module (1) comprises a second connecting element (22) for electrically connecting the second sensor (20) to the module (1),
wherein the module (1) comprises a third connecting element (32) for electrically connecting the main controller (30) to the module (1),
wherein the module (1) comprises a fourth connecting element (42) for electrically connecting the module (1) to a pump (100), for instance to a circulation pump (100).

## Description

The present invention relates to a sensor hub module for processing and/or transmitting data, wherein the data is receivable from at least a first sensor, a second sensor and a main controller. The invention further relates to a pump that comprises such a sensor hub module.

### BACKGROUND OF THE INVENTION

There are many developments in the field of pumping, especially relating to pumping fluids like water and/or circulation pumps, and especially regarding the interworking of electrical engineering, mechanical engineering, and telecommunications, especially in view of more sustainability, ease of installation and/or reduction of maintenance efforts.

Circulation pumps are well known and are nowadays used, for instance, in heating systems of industrial applications as well as private households for pumping a medium, especially water. For efficient control and functionality of a circulation pump, technical data regarding pressure, temperature and flow-rate of the pumped medium etc. can be required by a main controller. Such data can be detected and provided to the main controller by a variety of different sensors. However, sensors that detect aforementioned quantities are conventionally arranged in the immediate vicinity of the pump as said quantities are immanent to or associated with the pumped medium. The data then needs to be transmitted to the main controller that is not necessarily arranged in the immediate proximity of the pump. In other words, there can be a substantial distance between the sensors and the main controller and as a consequence, for providing the data detected by the sensors to the main controller, cabling effort can be considerable. The cabling effort not only comprises costs for the materials such as copper and an isolating polymer but also drawbacks and challenges due to spatial guiding of the cabling. The current state of the art in the field of circulation pumps, particularly in the Original Equipment Manufacturer (OEM) business, presents several significant drawbacks. Circulation pumps are produced in high volumes, amounting to many millions, which means that any variation in either the design of the pump or its internal electronics significantly impacts the overall production cost. This high production volume and the consequent cost sensitivity make it economically unfeasible to customize the pumps for individual customer requirements. Moreover, there is a growing demand from customers for the pumps to be connectable to external sensors to optimize pump control, for instance, by considering external sensor data from the heating system. Technically, it is possible to integrate such connectivity features into the pump electronics. However, the economic aspect makes it impractical, as all customers do not have the same requirements for pump connectivity. Therefore, the state of the art does not provide a cost-effective solution for the customization of connectivity features in circulation pumps.

### SUMMARY OF THE INVENTION

An object of the present invention is to provide a pump with less cabling (effort), particularly with reduced total cabling length.

The object of the present invention is achieved by a sensor hub module for processing and/or transmitting data, wherein the data is receivable from at least a first sensor, a second sensor and a main controller,
wherein the module comprises a first connecting element for electrically connecting the first sensor to the module,
wherein the module comprises a second connecting element for electrically connecting the second sensor to the module,
wherein the module comprises a third connecting element for electrically connecting the main controller to the module,
wherein the module comprises a fourth connecting element for electrically connecting the module to a pump, for instance to a circulation pump.

According to the present invention, it is advantageously possible to reduce the cabling effort - and along with it costs - as at least length of cables connecting the sensors to the main controller can be significantly reduced by connecting the sensors to the module. Also, according to the invention, a more compact solution is provided as more components - of the entire configuration comprising the pump and the sensors - are located or positioned close to each other. The sensors that are arranged around, on or in the proximity of the pump are connected to the sensor hub module which in turn is arranged around, on or in the proximity of the pump. The sensor hub module can comprise an embedded controller and/or processor for processing and/or transmitting data. The sensor hub module particularly can be, especially electrically, connected to the pump. In other words, the main controller can be connected to the pump indirectly, by means of the sensor hub module. Furthermore, the main controller can be arranged in a boiler for heating the pumped medium. In other words, the main controller can be a boiler controller. It can also be used for appliances for cooling systems or mixed heating and cooling systems. In other words, the main controller can be a boiler controller or a heat pump controller

According to a preferred embodiment of the present invention, the third connecting element is configured such that the module receives data from the main controller by means of a Local Interconnect Network or a LIN Bus. The sensor hub module can be configured as a LIN slave and the main controller as a LIN master. In other words, the module can be passively dependent on the main controller. Alternatively, the sensor hub module can be configured as a separate LIN master for the pump or another device.

According to an advantageous embodiment of the present invention, the module comprises a fifth connecting element for connecting the module to a device, especially to an actuator, for instance to a three-way valve.

According to a preferred embodiment of the present invention, the fifth connecting element is configured such that the module forwards, sends or transmits data to the device by means of a Local Interconnect Network or a LIN Bus.

According to an advantageous embodiment of the present invention, the module comprises a first lateral surface and a second lateral surface, wherein the first lateral surface and the second lateral surface are arranged parallel to each other, wherein the third connecting element for electrically connecting the main controller to the module and the fifth connecting element for connecting the module to a device are arranged on the first lateral surface and preferably parallel to each other. The first lateral surface and the second lateral surface can be perpendicular to a pump axis. It is also conceivable that the first lateral surface defines a first general plane of extension and the second lateral surface defines a second general plane of extension, wherein a first angle is formed between the first general plane of extension and the pump axis on the one hand and a second angle is formed between the second general plane of extension and the pump axis on the other hand. Furthermore, the third connecting element can be arranged on the first lateral surface and the fifth connecting element can be arranged on the second lateral surface. Also, at least one of the two connecting elements - the third or fifth connecting element - or both connecting elements can be arranged on a top surface or a bottom surface, the top and bottom surface being preferably parallel to each other and parallel to the pump axis.

According to a preferred embodiment of the present invention, the module comprises a front surface and a back surface, wherein the front surface and the back surface are arranged parallel to each other, wherein the fourth connecting element for electrically connecting the module to the pump
is arranged on the back surface or faces the back surface,
is at least partially spaced apart from the back surface, and
is formed such that it defines a connecting direction parallel to the back surface. By connecting the module according to such a configuration to the pump, it is advantageously possible to have a compact unit comprising the pump and the module without or at least with little protrusion of the module beyond an envelope of the pump. The connecting direction parallel to the back surface can be particularly parallel to the pump axis. Moreover, the fourth connecting element can comprise a connector and a transition portion. The transition portion can extend from the module, especially from the back surface of the module, to the connector. As such, the connector can be freestanding, allowing for a simple and fast connecting and disconnecting of the module to and from the pump.

The first connecting element, the second connecting element, the third connecting element connecting element, the fourth connecting element and the fifth connecting element can respectively comprise a first locking element, a second locking element, a third locking element, a fourth locking element and a fifth locking element, respectively for positioning and/or fixating a first counterpart, a second counterpart, a third counterpart, a fourth counterpart and a fifth counterpart. Each locking element can be configured flexibly.

Preferably, the sensor hub module comprises further connecting elements for further sensors, for instance a sixth connecting element for a third sensor, a seventh connecting element for a fourth sensor and an eighth connecting element for a fifth sensor. Possible sensors are temperature sensors, pressure sensors, flow sensors, turbidity sensors and conductimeters. However, the list of afore mentioned sensors is not conclusive. It is therefore also conceivable within the meaning of the present invention that further physical quantities be measured by further sensors.

According to an advantageous embodiment of the present invention, the module comprises a front surface and a back surface, wherein the front surface and the back surface are arranged parallel to each other, wherein the fourth connecting element
protrudes from the back surface, and
is formed such that it defines a connecting direction perpendicular to the back surface. The connecting direction can be particularly perpendicular to the pump axis. Also, the connecting direction can be particularly skew relative to the pump axis.

According to a preferred embodiment of the present invention, the first connecting element and the second connecting element respectively comprise at least two ports or endpoints. It is thereby advantageously possible to connect multiple first sensors (or multiple second sensors), for example temperature sensors, to the sensor hub module. More specifically, two temperature sensors can be arranged at two different locations and consequently provide two different temperatures to the sensor hub module, a first temperature sensor being connected to a first port of the sensor hub module and a second temperature sensor being connected to a second port of the sensor hub module.

Another subject of the present invention is a pump, especially a circulation pump, that comprises a sensor hub module according to any one of the preceding embodiments.

The same features and technical effects described within the framework of the inventive sensor hub module and its different embodiments also apply, individually or in combination, to the inventive pump.

According to an advantageous embodiment of the present invention, the pump comprises a rotation axis, wherein the module comprises a casing, wherein the casing protrudes a surface of the pump relative to a direction perpendicular to the rotation axis by maximally 30 mm, preferably by maximally 25 mm. The rotation axis of the pump is identical with the pump axis mentioned above within the context of the inventive sensor hub module. Therefore, it is advantageously possible according to the invention that the sensor hub module can be connected to the pump without requiring or taking too much space.

The pump can comprise a pump housing with an impeller therein, a motor housing with an electrical motor therein, and a terminal box with electrical and/or electronical components therein for controlling the electrical motor. It is also conceivable that the electrical connection between the sensor hub module and the pump by means of the fourth connecting element is established on a front side or back side of the terminal box, the front side of the terminal box facing away from the pump housing and motor housing.

### BRIEF DESCRIPTION OF THE DRAWING

Figure 1a schematically and exemplarily illustrates, in a first perspective view, a first embodiment of an inventive sensor hub module for processing and/or transmitting data, especially for processing and/or transmitting data to a circulation pump and a three-way valve.
Figure 1b schematically illustrates the first embodiment of the inventive sensor hub module shown in Figure 1a in a second perspective view.
Figure 1c schematically and exemplarily illustrates, in a side view, the first embodiment of an inventive sensor hub module shown in figure 1a and figure 1b, wherein the sensor hub module is electrically connected to a circulation pump.
Figure 2a schematically and exemplarily illustrates, in the first perspective view, a second embodiment of an inventive sensor hub module for processing and/or transmitting data, especially for processing and/or transmitting data to a circulation pump and a three-way valve.
Figure 2b schematically illustrates the second embodiment of the inventive sensor hub module shown in Figure 2a in a third perspective view.
Figure 2c schematically and exemplarily illustrates, in a fourth perspective view, the second embodiment of an inventive sensor hub module shown in figure 2a and figure 2b, wherein the sensor hub module is electrically connected to a circulation pump.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

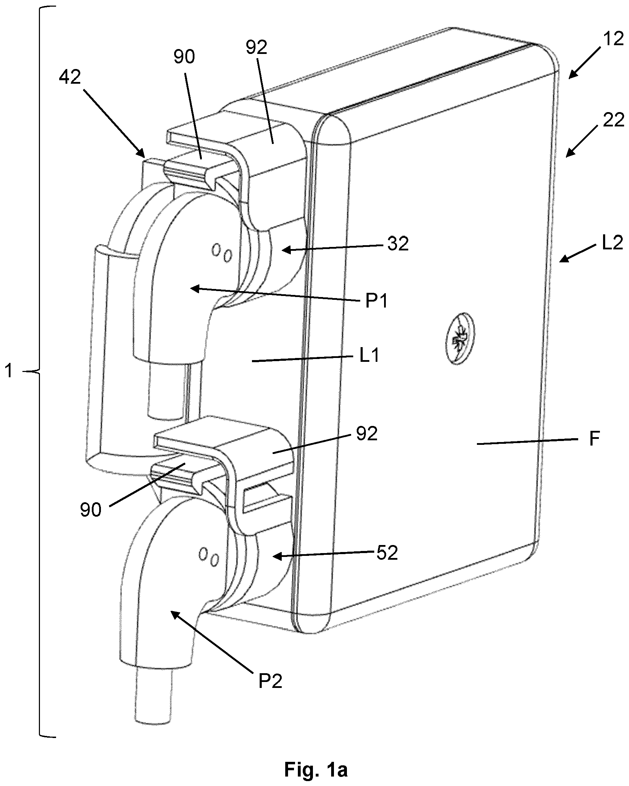

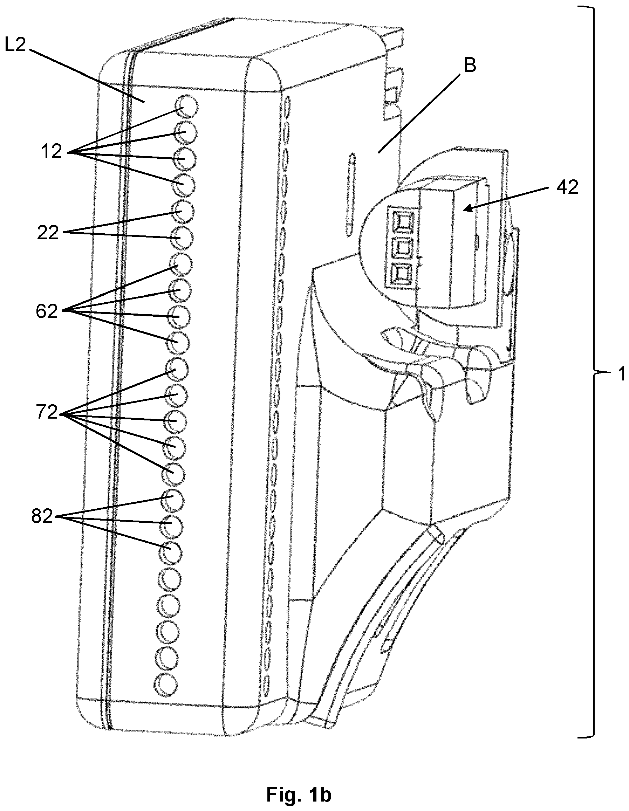

**Figure 1a** schematically and exemplarily illustrates, in a first perspective view, a first embodiment of an inventive sensor hub 1 module for processing and/or transmitting data, especially for processing and/or transmitting data to a circulation pump 100 and a three-way valve. The sensor hub module 1 is configured such that it can receive data from a first sensor, a second sensor, a third sensor, a fourth sensor, a fifth sensor and also a main controller, as will be described and further elucidated in the description of figure 1b.

The main controller can be arranged especially in a boiler. In other words, the main controller can be a boiler controller.

The sensor hub module 1 comprises a first connecting element 12 for electrically connecting the first sensor to the module 1. The sensor hub module 1 further comprises a second connecting element 22 for electrically connecting the second sensor to the module 1. The first connecting element 12 and the second connecting element 22 are not visible in figure 1a. Both connecting elements 12, 22 will be illustrated in figure 1b. Both connecting elements 12, 22 are arranged on a second lateral surface L2 of the sensor hub module 1.

In addition to the second lateral surface L2, the sensor hub module 1 also comprises a first lateral surface L1. The first lateral surface L1 and the second lateral surface L2 are arranged parallel to each other.

Furthermore, the sensor hub module 1 comprises a third connecting element 32 for electrically connecting the main controller to the module 1. The third connecting element 32 is arranged on the first lateral surface L1 and formed as a socket. In figure 1a, a first plug P1 is plugged into the third connecting element 32. The first plug P1 is a connecting end of a LIN bus that connects the main controller to the sensor hub module 1. The third connecting element 32 also comprises a locking element 90 for properly positioning and fixing the first plug P1. The locking element 90 is configured flexibly and can snap on an end face of the first plug P1. It is thereby advantageously possible that the risk of unplugging the first plug P1 and of accidents are significantly reduced as unwanted unplugging will be impeded. For the sake of simplification, only a tiny part of the LIN bus is shown in figure 1a. Also, a protective element 92 is arranged on the first lateral surface L1. The protective element 92 mechanically protects the locking element 90, the third connecting element 32 and the first plug P1.

The sensor hub module 1 further comprises a fifth connecting element 52 for connecting the module 1 to a to a three-way valve. The fifth connecting element 52 is also arranged on the first lateral surface L1 and also formed as a socket. In figure 1a, a second plug P2 is plugged into the fifth connecting element 52. The second plug P2 is a connecting end of a further LIN bus that connects the sensor hub module 1 to the three-way valve. The fifth connecting element 52 also comprises a locking element 90 for properly positioning and fixing the second plug P2. The locking element 90 is configured flexibly and can snap on an end face of the second plug P2. It is thereby advantageously possible to reduce the risk of unplugging the second plug P2 and therefore of accidents. Only a tiny part of the LIN bus is shown in figure 1a. A further protective element 92 is arranged on the first lateral surface L1. The further protective element 92 mechanically protects the locking element 90, the fifth connecting element 52 and the second plug P2.

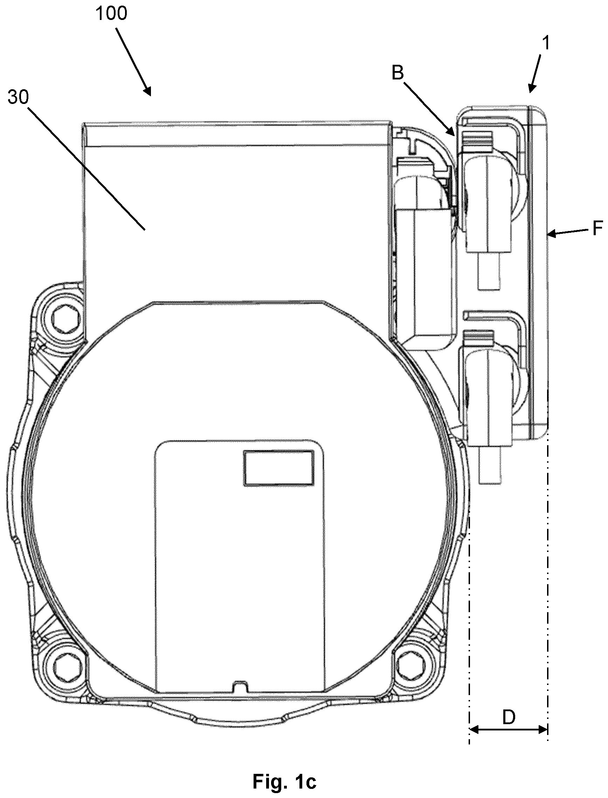

A first connecting direction of the first plug P1 and a second connecting direction of the second plug P2 are parallel to each other, both connecting directions being perpendicular to the first lateral surface L1 and parallel to a front surface F of the sensor hub module 1. The front surface F is perpendicular to the first lateral surface L1 and to the second lateral surface L2. When in operation, the sensor hub module is connecting to the circulation pump 100 (figure 1c) by means of a fourth connecting element 42. The front surface F then faces away from the pump 100.

**Figure 1b** schematically illustrates the first embodiment of the inventive sensor hub module 1 shown in Figure 1a in a second perspective view. In addition to the first connecting element 12 and the second connecting element 22, a sixth connecting element 62, a seventh connecting element 72 and an eighth connecting element 82 is arranged or formed on the second lateral surface L2. The first connecting element 12 comprises four ports, as indicated by the four lines in figure 1b. As a consequence, multiple temperature sensors can be connected to the first connecting element 12. The second connecting element 22 comprises two ports for connecting two conductimeters. The sixth connecting element 62 comprises four ports. Hence up to four pressure sensors can be connected to the sensor hub module 1. The seventh connecting element 72 comprises five different ports. Therefore, up to five flow-rate sensors can be connected to the sensor hub module 1. Also, the sensor hub module 1 comprises three further ports for connecting up to three turbidity sensors to the sensor hub module 1. The sensor hub module 1 according to the first embodiment comprises five further ports for connecting further sensors to the sensor hub module 1, especially for connecting sensors that detect physical quantities other than temperature, pressure, flow-rate, conductivity - especially electric conductivity - and turbidity. All ports are aligned on the second lateral surface L2 which results in a compact arrangement on the sensor hub module 1.

By means of the fourth connecting element 42 the sensor hub module 1 can be connected to the circulation pump 100. The fourth connecting element 42 is formed as or comprises a plug that is spaced apart from the back surface B. A connecting direction of the fourth connecting element 42 is parallel to the back surface B.

**Figure 1c** schematically and exemplarily illustrates, in a side view, the first embodiment of the inventive sensor hub module 1 shown in figure 1a and figure 1b, wherein the sensor hub module 1 is electrically connected to a circulation pump 100. The circulation pump 100 comprises a pump housing with an impeller therein, a motor housing with an electrical motor therein, and a terminal box 30 with electrical and/or electronical components therein for controlling the electrical motor. In figure 1c, the pump housing and the motor housing are not visible as they are arranged - with respect to figure 1c - behind the terminal box 30. The electrical connection between the sensor hub module 1 and the pump 100 is materialized by moving the sensor hub module 1 in the connecting direction of the fourth connecting element 42, that is in a direction perpendicular to the drawing plane of figure 1c.

A rotation axis of the pump 100 is - with respect to figure 1c - perpendicular to the drawing plane. A distance D in a direction perpendicular to the rotation axis between a lateral surface of the terminal box 30 and the front surface F is 20 mm. In other words, the sensor hub module 1 does not exceed an outer envelope or an outer volume of the pump 100 significantly. Therefore, a unit comprising the pump 100 and the module 1 is relatively compact.

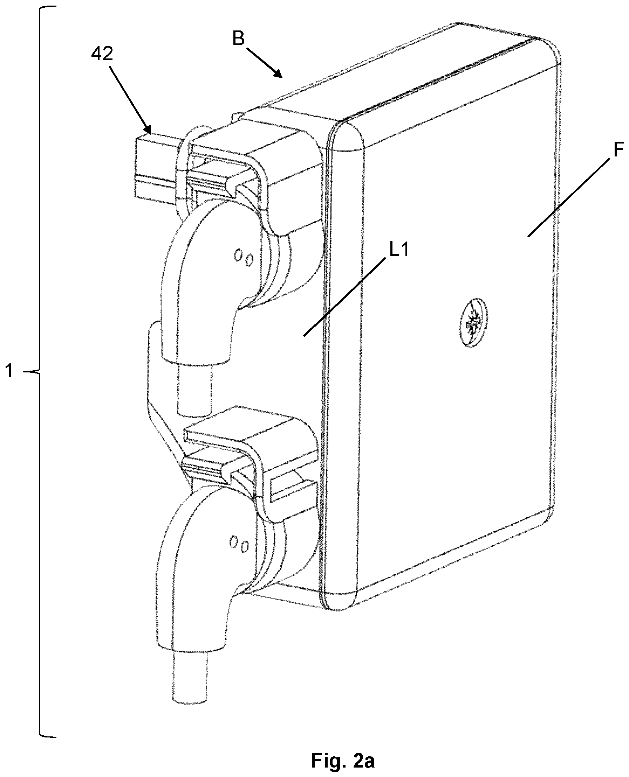

**Figure 2a** schematically and exemplarily illustrates, in the first perspective view, a second embodiment of an inventive sensor hub module 1 for processing and/or transmitting data, especially for processing and/or transmitting data to a circulation pump 100 and a three-way valve. The second embodiment differs from the first embodiment particularly in the configuration of the fourth connecting element 42.

The fourth connecting element 42 according to the second embodiment is formed as a plug. The fourth connecting element 42 protrudes from the back surface B and is formed such that it defines a connecting direction perpendicular to the back surface B. The fourth connecting element 42 also comprises a locking element 90 for positioning and fixing the fourth connecting element 42 when connected to the pump 100.

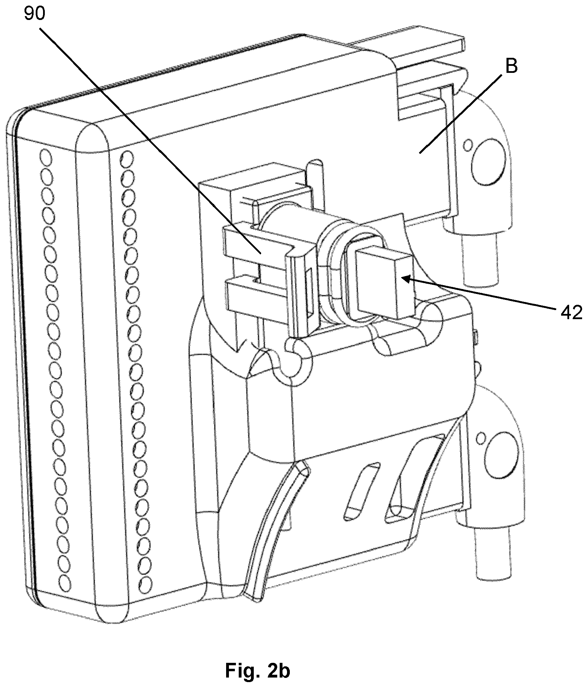

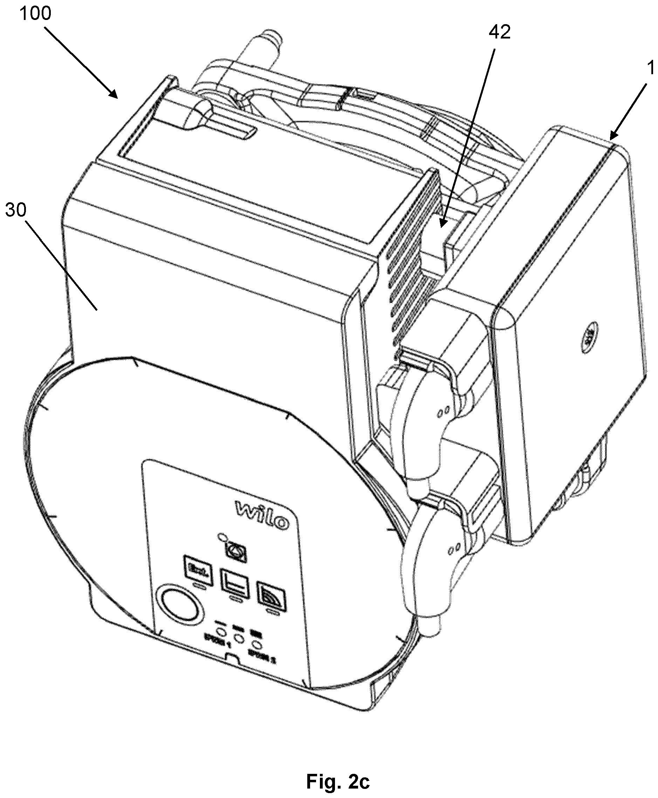

**Figure 2c** schematically and exemplarily illustrates, in a fourth perspective view, the second embodiment of an inventive sensor hub module 1 shown in figure 2a and figure 2b, wherein the sensor hub module 1 is electrically connected to a circulation pump 100.

In the terminal box 30 of the pump 100, a counterpart of the fourth connecting element 42 is arranged, the counterpart being formed as a socket. The counterpart is arranged on a lateral surface of the terminal box 30.

### Reference signs

- 1: Sensor hub module

- 12: First connecting element
- 22: Second connecting element
- 32: Third connecting element
- 42: Fourth connecting element
- 52: Fifth connecting element
- 62: Sixth connecting element
- 72: Seventh connecting element
- 82: Eighth connecting element
- 90: Locking element
- 92: Protective element

- 100: Circulation pump

- B: Back surface
- D: Distance
- F: Front surface
- L1: First lateral surface
- L2: Second lateral surface
- P1: First plug

## Claims

1. Sensor hub module (1) for processing and/or transmitting data, wherein the data is receivable from at least a first sensor, a second sensor and a main controller,
wherein the module (1) comprises a first connecting element (12) for electrically connecting the first sensor to the module (1),
wherein the module (1) comprises a second connecting element (22) for electrically connecting the second sensor to the module (1),
wherein the module (1) comprises a third connecting element (32) for electrically connecting the main controller to the module (1),
wherein the module (1) comprises a fourth connecting element (42) for electrically connecting the module (1) to a pump (100), for instance to a circulation pump (100).

2. Sensor hub module (1) according to claim 1, wherein the third connecting element (32) is configured such that the module (1) receives data from the main controller by means of a Local Interconnect Network or a LIN Bus.

3. Sensor hub module (1) according to any one of the preceding claims, wherein the module (1) comprises a fifth connecting element (52) for connecting the module (1) to a device, especially to an actuator, for instance to a three-way valve.

4. Sensor hub module (1) according to claim 3, wherein the fifth connecting element (52) is configured such that the module (1) forwards, sends or transmits data to the device by means of a Local Interconnect Network or a LIN Bus.

5. Sensor hub module (1) according to claim 3 or 4, wherein the module (1) comprises a first lateral surface (L1) and a second lateral surface (L2), wherein the first lateral surface (L1) and the second lateral surface (L2) are arranged parallel to each other, wherein the third connecting element (32) for electrically connecting the main controller to the module (1) and the fifth connecting element (52) for connecting the module (1) to a device are arranged on the first lateral surface (L1) and preferably parallel to each other.

6. Sensor hub module (1) according to any one of the preceding claims, wherein the module (1) comprises a front surface (F) and a back surface (B), wherein the front surface (F) and the back surface (B) are arranged parallel to each other, wherein the fourth connecting element (42) for electrically connecting the module (1) to the pump (100)
is arranged on the back surface (B) or faces the back surface (B),
is at least partially spaced apart from the back surface (B), and
is formed such that it defines a connecting direction parallel to the back surface (B).

7. Sensor hub module (1) according to any one of the preceding claims 1 to 5, wherein the module (1) comprises a front surface (F) and a back surface (B), wherein the front surface (F) and the back surface (B) are arranged parallel to each other, wherein the fourth connecting element (42)
protrudes from the back surface (B), and
is formed such that it defines a connecting direction perpendicular to the back surface (B).

8. Sensor hub module (1) according to any one of the preceding claims, wherein the first connecting element (12) and the second connecting element (22) respectively comprise at least two ports or endpoints.

9. Pump (100), especially a circulation pump (100), that comprises a sensor hub module (1) according to any one of the preceding claims.

10. Pump (100) according to claim 9, wherein the pump (100) comprises a rotation axis, wherein the module (1) comprises a casing, wherein the casing protrudes a surface of the pump (100) relative to a direction perpendicular to the rotation axis by maximally 30 mm, preferably by maximally 25 mm, for instance by maximally 20 mm.

## Amended claims

### Amended claims in accordance with Rule 137(2) EPC.

1. Sensor hub module (1) with an embedded controller for processing and/or transmitting data, wherein the data is receivable from at least a first sensor, a second sensor and a main controller,
wherein the module (1) comprises a first connecting element (12) for electrically connecting the first sensor to the module (1),
wherein the module (1) comprises a second connecting element (22) for electrically connecting the second sensor to the module (1),
wherein the module (1) comprises a third connecting element (32) for electrically connecting the main controller to the module (1),
wherein the module (1) comprises a fourth connecting element (42) for electrically connecting the module (1) to a circulation pump (100),
wherein the main controller is connected to the pump (100) indirectly, by means of the sensor hub module (1),
wherein the main controller is arranged in a boiler for heating the pumped medium or in a cooling system or in a mixed heating and cooling system..

2. Sensor hub module (1) according to claim 1, wherein the third connecting element (32) is configured such that the module (1) receives data from the main controller by means of a Local Interconnect Network or a LIN Bus.

3. Sensor hub module (1) according to any one of the preceding claims, wherein the module (1) comprises a fifth connecting element (52) for connecting the module (1) to a device, especially to an actuator, for instance to a three-way valve.

4. Sensor hub module (1) according to claim 3, wherein the fifth connecting element (52) is configured such that the module (1) forwards, sends or transmits data to the device by means of a Local Interconnect Network or a LIN Bus.

5. Sensor hub module (1) according to claim 3 or 4, wherein the module (1) comprises a first lateral surface (L1) and a second lateral surface (L2), wherein the first lateral surface (L1) and the second lateral surface (L2) are arranged parallel to each other, wherein the third connecting element (32) for electrically connecting the main controller to the module (1) and the fifth connecting element (52) for connecting the module (1) to a device are arranged on the first lateral surface (L1) and preferably parallel to each other.

6. Sensor hub module (1) according to any one of the preceding claims, wherein the module (1) comprises a front surface (F) and a back surface (B), wherein the front surface (F) and the back surface (B) are arranged parallel to each other, wherein the fourth connecting element (42) for electrically connecting the module (1) to the pump (100)
is arranged on the back surface (B) or faces the back surface (B),
is at least partially spaced apart from the back surface (B), and
is formed such that it defines a connecting direction parallel to the back surface (B).

7. Sensor hub module (1) according to any one of the preceding claims 1 to 5, wherein the module (1) comprises a front surface (F) and a back surface (B), wherein the front surface (F) and the back surface (B) are arranged parallel to each other, wherein the fourth connecting element (42)
protrudes from the back surface (B), and
is formed such that it defines a connecting direction perpendicular to the back surface (B).

8. Sensor hub module (1) according to any one of the preceding claims, wherein the first connecting element (12) and the second connecting element (22) respectively comprise at least two ports or endpoints.

9. Circulation pump (100) that comprises a sensor hub module (1) according to any one of the preceding claims.

10. Circulation pump (100) according to claim 9, wherein the pump (100) comprises a rotation axis, wherein the module (1) comprises a casing, wherein the casing protrudes a surface of the pump (100) relative to a direction perpendicular to the rotation axis by maximally 30 mm, preferably by maximally 25 mm, for instance by maximally 20 mm.
